# EUROPÄISCHE PATENTSCHRIFT

(11) **EP 3 284 567 B1**
(45) Veröffentlichungstag und Bekanntmachung des Hinweises auf die Patenterteilung: **26.02.2020**
(21) Anmeldenummer: 16184549.0
(22) Anmeldetag: 17.08.2016
(51) Int. Cl.: B29B 7/80, B29B 7/40, B29B 7/48, B29B 7/60, B29B 7/72, B29B 7/74, B29B 7/88, B29B 9/06, B29C 48/25, B29C 48/27, B29C 48/285, B29C 48/385, B29C 48/39, B29B 9/12, B29C 48/92

(54) **VORRICHTUNG UND VERFAHREN ZUR HERSTELLUNG EINER GEFÄRBTEN UND EINER UNGEFÄRBTEN KUNSTSTOFFSCHMELZE**
DEVICE AND METHOD FOR PRODUCING A DYED AND AN UNDYED POLYMER MELT
DISPOSITIF ET PROCÉDÉ DE FABRICATION D'UNE MATIÈRE PLASTIQUE FONDUE NON COLORÉE ET COLORÉE

(43) Veröffentlichungstag der Anmeldung: 21.02.2018
(73) Patentinhaber: Coperion GmbH, 70469 Stuttgart (DE)
(72) Erfinder: CONRAD, Ulrich, 31008 Elze (DE); KERN, Norbert, 71732 Tamm (DE); SCHMUDDE, Markus, 71711 Murr (DE); STÖHRER, Bernhard, 74385 Pleidelsheim (DE); HORNBERGER, Heiko, 74394 Hessigheim (DE)
(74) Vertreter: Rau, Schneck & Hübner Patentanwälte Rechtsanwälte PartGmbB

(56) Entgegenhaltungen:
- EP-A1- 0 841 144
- EP-A1- 2 016 995
- WO-A1-2012/152342
- WO-A2-2007/101359
- DE-A1- 4 214 081
- DE-A1- 10 334 293
- DE-A1-102007 050 681
- DE-A1-102013 217 323
- DE-U1-202008 017 267
- US-A- 5 053 176
- US-A- 5 232 960
- US-A1- 2008 093 763

## Beschreibung

Die Erfindung betrifft eine Vorrichtung und ein Verfahren zur Herstellung einer gefärbten und einer ungefärbten Kunststoff-Schmelze.

Aus der DE 10 2004 002 401 A1 ist eine Vorrichtung und ein Verfahren zur Herstellung von Kunststoff-Granulat aus einer Kunststoff-Schmelze bekannt. Die mittels einer Schneckenmaschine erzeugte Kunststoff-Schmelze wird in Form von Kunststoff-Strängen extrudiert und mittels einer Unterwasser-Granuliereinrichtung granuliert. Eine derartige Vorrichtung wird entweder ausschließlich zur Herstellung von gefärbtem Kunststoff-Granulat oder ausschließlich zur Herstellung von ungefärbtem, also naturfarbenem Kunststoff-Granulat verwendet. Eine wahlweise Herstellung von gefärbtem und ungefärbtem Kunststoff-Granulat ist nicht möglich, da ein bei der Herstellung einer gefärbten Kunststoff-Schmelze verwendetes Farbmittel eine nachfolgend hergestellte ungefärbte Kunststoff-Schmelze kontaminieren würde.

Aus der US 2008/093763 A1 ist eine Vorrichtung zur Herstellung mehrfarbiger Faserkunststoffverbundprodukte bekannt. Die Vorrichtung umfasst einen Doppelschneckenextruder mit zwei Zuführeinheiten. Zunächst wird ein Basispolymermaterial mittels der ersten Zuführeinheit in den Doppelschneckenextruder eingebracht. Dieses wird anschließend stromabwärts mit farbigem und mit Fasern versehenem Material vermischt, das mittels der zweiten Zuführeinheit in den Doppelschneckenextruder zugeführt wird. Die zweite Zuführeinheit umfasst mehrere Farbeinheiten, die mittels einer Steuereinheit gesteuert werden. Die Steuereinheit ermöglicht die sequentielle Ausbringung von Farbstoffen und anderer Additive über die zweite Zuführeinheit. Zwischen zwei Schritten, in denen unterschiedlicher Farbstoff zugemischt wird, ist ein Verzögerungsschritt ausgebildet, in dem kein Farbstoff zugemischt wird. Der Verzögerungsschritt hat eine Zeitdauer zwischen 1 und 15 Sekunden, sodass die extrudierten Faserkunststoffverbundprodukte ein gewünschtes mehrfarbiges Aussehen haben, beispielsweise in Form von natürlichem Holz.

Aus der EP 0 841 144 A1 ist eine Extrusionsanlage mit einem Hauptextruder und einem Beispritzextruder bekannt, der über ein Dreiwegeventil mit dem Hauptextruder verbunden ist. Der Hauptextruder stellt eine nicht gefärbte Basisformmasse bereit, der über den Beispritzextruder und über das Dreiwegeventil eine konzentriert gefärbte Masterbatchformmasse zugeführt wird. Für einen Farbwechsel wird das Dreiwegeventil gespült, sodass die Farbwechselzeit minimiert wird und nach der Spülung eine neu gefärbte Masterbatchformmasse über das Dreiwegeventil in die Basisformmasse zugeführt werden kann.

Aus der DE 42 14 081 A1 ist eine Vorrichtung zum automatischen Auswählen und Zuführen eines farbigen Granulats für eine Spritzgießmaschine bekannt. Die Spritzgießmaschine wird ausschließlich mit dem ausgewählten farbigen Granulat betrieben.

Aus der DE 103 34 293 A1 ist eine Reinigungszusammensetzung für kunststoffverarbeitende Maschinen bekannt.

Aus der DE 10 2013 217 323 A1 ist eine Extrusionsvorrichtung zur Herstellung von Mehr-Komponenten-Werkstoffen mit einer radialen und rotationssymmetrischen Konzentrationsverteilung bekannt.

Der Erfindung liegt die Aufgabe zugrunde, eine Vorrichtung zu schaffen, die in einfacher, flexibler und wirtschaftlicher Weise die wahlweise Herstellung einer gefärbten und einer ungefärbten Kunststoff-Schmelze ermöglicht.

Diese Aufgabe wird durch eine Vorrichtung mit den Merkmalen des Anspruchs 1 gelöst. Erfindungsgemäß wurde erkannt, dass die Mehrwellen-Schneckenmaschine im Bereich der mindestens zwei Gehäusebohrungen und der darin angeordneten mindestens zwei Behandlungselementwellen eine ausreichende Selbstreinigung aufweist, jedoch die Zuführung des Farb-Granulats bzw. des Farb-Masterbatch-Granulats in die mindestens zwei Gehäusebohrungen getrennt erfolgen muss, um eine Kontamination der ungefärbten Kunststoff-Schmelze durch restliches Farb-Granulat und darin enthaltenes Farbmittel zu vermeiden. Durch die zwei separaten Zuführöffnungen werden das ungefärbte Kunststoffmaterial zur Bereitstellung bzw. Herstellung der ungefärbten Kunststoff-Schmelze und das Farb-Granulat bzw. das darin enthaltene Farbmittel zur Herstellung der gefärbten Kunststoff-Schmelze strikt getrennt voneinander in die mindestens zwei Gehäusebohrungen zugeführt. Durch das Auswählen des ersten Betriebsmodus mittels der Steuereinrichtung werden die Dosiereinrichtungen derart angesteuert, dass entweder im ersten Betriebsmodus die gefärbte Kunststoff-Schmelze oder im zweiten Betriebsmodus die ungefärbte Kunststoff-Schmelze herstellbar ist. Die Dosiereinrichtungen sind mittels der Steuereinrichtung somit unabhängig voneinander betreibbar. Beispielsweise ist die Steuereinrichtung derart ausgebildet, dass wahlweise ausschließlich die erste Dosiereinrichtung oder ausschließlich die zweite Dosiereinrichtung oder beide Dosiereinrichtungen gemeinsam betreibbar sind.

Im ersten Betriebsmodus wird mittels der ersten Dosiereinrichtung das ungefärbte Kunststoffmaterial in die Gehäusebohrungen zugeführt. Zusätzlich wird mittels der zweiten Dosiereinrichtung das Farb-Granulat durch die zweite Zuführöffnung in die Gehäusebohrungen zugeführt. Die gefärbte Kunststoff-Schmelze weist zwischen 0,5 Gew.-% und 10 Gew.-%, insbesondere zwischen 1 Gew.-% und 6 Gew.-%, und insbesondere zwischen 1,5 Gew.-% und 4 Gew.-% Farbmittel, das in dem Farb-Granulat enthalten ist, und zwischen 90 Gew.-% und 99,5 Gew.-%, insbesondere zwischen 94 Gew.-% und 99 Gew.-%, und insbesondere zwischen 96 Gew.-% und 98,5 Gew.-% ungefärbtes Kunststoffmaterial auf. Zusätzlich können der gefärbten Kunststoff-Schmelze andere Additive als das Farbmittel zugemischt werden, die in den oben genannten Gewichtsanteilen nicht berücksichtigt sind. Das ungefärbte Kunststoffmaterial wird als Schüttgut, insbesondere als Pulver und/oder Granulat, und/oder als Schmelze zugeführt. Als Farb-Granulat bzw. Farb-Masterbatch-Granulat bzw. Masterbatch-Granulat wird eine granulatförmige Mischung aus dem Farbmittel und einem Kunststoffmaterial bezeichnet. Das Farb-Granulat umfasst das Farbmittel, das in konzentrierter Form in dem Kunststoffmaterial gebunden ist und so das Farb-Granulat ausbildet. Das Farbmittel ist beispielsweise Ruß. Das Kunststoffmaterial ist beispielsweise identisch mit dem ungefärbten Kunststoffmaterial.

Im zweiten Betriebsmodus wird ausschließlich das ungefärbte Kunststoffmaterial mittels der ersten Dosiereinrichtung durch die erste Zuführöffnung in die mindestens zwei Gehäusebohrungen zugeführt. Das Kunststoffmaterial wird als Schüttgut, insbesondere als Pulver und/oder Granulat, und/oder als Schmelze zugeführt.

Dadurch, dass die zweite Zuführöffnung der ersten Zuführöffnung vorgeordnet ist, ist durch Zuführung eines Reinigungs-Granulats durch die zweite Zuführöffnung eine vollständige Selbstreinigung der Behandlungselementwellen und der Gehäuseinnenwand des Gehäuses in einfacher Weise möglich. Eine Umstellung der Vorrichtung von dem ersten Betriebsmodus zu dem zweiten Betriebsmodus ist schnell und flexibel möglich. Dadurch, dass die zweite Dosiereinrichtung eine erste Dosiereinheit zum Zuführen des Farb-Granulats und eine zweite Dosiereinheit zum Zuführen eines Reinigungs-Granulats umfasst, kann die Herstellung in einfacher Weise von dem ersten Betriebsmodus zu dem zweiten Betriebsmodus umgestellt werden.

In einem Reinigungsmodus wird nach der Herstellung der gefärbten Kunststoff-Schmelze das Reinigungs-Granulat mittels der zweiten Dosiereinrichtung durch die zweite Zuführöffnung in die mindestens zwei Gehäusebohrungen zugeführt. Durch das Reinigungs-Granulat wird in einem Umstellungszeitraum die zweite Zuführöffnung und die Mehrwellen-Schneckenmaschine von dem Farb-Granulat bzw. dem Farbmittel gereinigt. Nach Abschluss der Reinigung wird die zweite Dosiereinrichtung deaktiviert und der Reinigungsmodus beendet. Anschließend wird in dem zweiten Betriebsmodus mittels der ersten Dosiereinrichtung das ungefärbte Kunststoffmaterial durch die erste Zuführöffnung in die mindestens zwei Gehäusebohrungen zugeführt. Das Reinigungs-Granulat ist beispielsweise ein Regranulat.

Nach der Herstellung der gefärbten Kunststoff-Schmelze in dem ersten Betriebsmodus wird zunächst in dem Reinigungsmodus die Mehrwellen-Schneckenmaschine gereinigt. Hierzu wird das Reinigungs-Granulat mittels der zweiten Dosiereinrichtung in die mindestens zwei Gehäusebohrungen zugeführt. In einem Übergangszeitraum findet nach der Beendigung des ersten Betriebsmodus eine Selbstreinigung der Mehrwellen-Schneckenmaschine statt. In diesem Übergangszeitraum entsteht eine unreine Kunststoff-Schmelze, die weder als gefärbte Kunststoff-Schmelze noch als ungefärbte Kunststoff-Schmelze verwertbar ist und deshalb separiert wird. Nach dem Übergangszeitraum ist die Selbstreinigung bzw. der Reinigungsmodus abgeschlossen, sodass in gewünschter Weise anschließend die ungefärbte Kunststoff-Schmelze in dem zweiten Betriebsmodus herstellbar ist.

Dadurch, dass lediglich eine einzige Mehrwellen-Schneckenmaschine benötigt wird, wird der maschinentechnische Aufwand erheblich reduziert, sodass die wahlweise Herstellung der gefärbten und der ungefärbten Kunststoff-Schmelze in einfacher und wirtschaftlicher Weise möglich ist. Die mindestens zwei Behandlungselementwellen sind insbesondere gleichsinnig drehantreibbar. Die Mehrwellen-Schneckenmaschine ist vorzugweise als Zweiwellen-Schneckenmaschine ausgebildet. Wird zunächst die ungefärbte Kunststoff-Schmelze hergestellt, ist die nachfolgende Herstellung der gefärbten Kunststoff-Schmelze einfach, schnell und flexibel möglich, da die gefärbte Kunststoff-Schmelze von der ungefärbten Kunststoff-Schmelze nicht kontaminiert wird. Wird demgegenüber zunächst die gefärbte Kunststoff-Schmelze hergestellt, so wird zur Herstellung der ungefärbten Kunststoff-Schmelze in einem Übergangszeitraum zunächst eine unreine Kunststoff-Schmelze hergestellt, da die Mehrwellen-Schneckenmaschine eine Selbstreinigung durchführt. Zur Selbstreinigung sind die mindestens zwei Behandlungselementwellen einander dicht kämmend und eine Gehäuseinnenwand abstreifend ausgebildet. Ist die Selbstreinigung nach dem Übergangszeitraum abgeschlossen, so wird ohne aufwändige Reinigungsmaßnahmen die ungefärbte Kunststoff-Schmelze hergestellt. In dem Übergangszeitraum wird die aus der Mehrwellen-Schneckenmaschine ausgetragene unreine Kunststoff-Schmelze beispielsweise granuliert und das erzeugte unreine Kunststoff-Granulat von dem erzeugten ungefärbten Kunststoff-Granulat und dem erzeugten gefärbten Kunststoff-Granulat separiert. Die Vorrichtung ermöglicht somit in einfacher, flexibler und wirtschaftlicher Weise eine wahlweise Herstellung der gefärbten und der ungefärbten Kunststoff-Schmelze.

Eine Vorrichtung nach Anspruch 2 gewährleistet eine einfache wahlweise Herstellung der gefärbten und der ungefärbten Kunststoff-Schmelze. In dem ersten Betriebsmodus steuert die Steuereinrichtung die erste Dosiereinrichtung und die zweite Dosiereinrichtung derart an, dass mittels der ersten Dosiereinrichtung das ungefärbte Kunststoffmaterial durch die erste Zuführöffnung und mittels der zweiten Dosiereinrichtung das Farb-Granulat durch die zweite Zuführöffnungen in die mindestens zwei Gehäusebohrungen zugeführt werden. Zusätzlich können andere Additive als das im Farb-Granulat enthaltene Farbmittel in die mindestens zwei Gehäusebohrungen zugeführt werden. In dem zweiten Betriebsmodus steuert die Steuereinrichtung die erste Dosiereinrichtung derart an, dass das erforderliche ungefärbte Kunststoffmaterial durch die erste Zuführöffnung in die mindestens zwei Gehäusebohrungen zugeführt wird. Die zweite Dosiereinrichtung wird in dem zweiten Betriebsmodus von der Steuereinrichtung derart angesteuert, dass kein Farb-Granulat durch die zweite Zuführöffnung zugeführt wird. Vorzugsweise wird die zweite Dosiereinrichtung in dem zweiten Betriebsmodus vollständig deaktiviert.

Eine Vorrichtung nach Anspruch 3 gewährleistet eine einfache, flexible und wirtschaftliche wahlweise Herstellung der gefärbten und der ungefärbten Kunststoff-Schmelze. Dadurch, dass die mindestens zwei Behandlungselementwellen einander dicht kämmend ausgebildet sind, reinigen sich diese in einfacher Weise selbst.

Eine Vorrichtung nach Anspruch 4 gewährleistet eine einfache, flexible und wirtschaftliche wahlweise Herstellung der gefärbten und der ungefärbten Kunststoff-Schmelze. Dadurch, dass die mindestens zwei Behandlungselementwellen die Gehäuseinnenwand abstreifen, wird diese in einfacher Weise von den mindestens zwei Behandlungselementwellen gereinigt.

Eine Vorrichtung nach Anspruch 5 gewährleistet eine einfache, flexible und wirtschaftliche wahlweise Herstellung der gefärbten und der ungefärbten Kunststoff-Schmelze. Dadurch, dass zwischen den Zuführöffnungen Knetelemente als Behandlungselemente drehfest auf den Wellen angeordnet sind, wird das durch die zweite Zuführöffnung zugeführte Farb-Granulat vor der ersten Zuführöffnung bereits erwärmt und insbesondere zumindest teilweise oder vollständig aufgeschmolzen. In dem ersten Betriebsmodus ist der zusätzlich erforderliche Energieeintrag zum Aufschmelzen des Farb-Granulats und gegebenenfalls des durch die erste Zuführöffnung zugeführten Kunststoffmaterials stromabwärts der ersten Zuführöffnung gering. Hierdurch ist insbesondere der maschinentechnische Aufwand stromabwärts der ersten Zuführöffnung gering. Die Knetelemente können als einzelne Knetscheiben und/oder als Knetblöcke ausgebildet sein. Der jeweilige Knetblock umfasst mehrere einteilig miteinander verbundene Knetscheiben.

Eine Vorrichtung nach Anspruch 6 gewährleistet eine einfache wahlweise Herstellung der gefärbten und der ungefärbten Kunststoff-Schmelze. Dadurch, dass zwischen den Zuführöffnungen auf den Wellen ausschließlich Schneckenelemente als Behandlungselemente drehfest angeordnet sind, ist der maschinentechnische Aufwand im Abschnitt zwischen den Zuführöffnungen gering. Das durch die zweite Zuführöffnung zugeführte Farb-Granulat wird mittels der Schneckenelemente lediglich in einer Förderrichtung zu der ersten Zuführöffnung gefördert. In dem ersten Betriebsmodus wird durch die zweite Zuführöffnung in gewünschter Weise das Farb-Granulat zugeführt. In dem zweiten Betriebsmodus erfolgt durch die zweite Zuführöffnung keine Zuführung von Farb-Granulat. In dem Reinigungsmodus wird durch die zweite Zuführöffnung das Reinigungs-Granulat zugeführt.

Eine Vorrichtung nach Anspruch 7 gewährleistet eine einfache, flexible und wirtschaftliche wahlweise Herstellung der gefärbten und der ungefärbten Kunststoff-Schmelze. Die Schneckenelemente und die Knetelemente ermöglichen in einfacher Weise ein Aufschmelzen des Kunststoffmaterials und/oder des Farb-Granulats und/oder ein Homogenisieren des in dem Farb-Granulat enthaltenen Farbmittels und des Kunststoffmaterials. Die Knetelemente können als einzelne Knetscheiben und/oder als Knetblöcke ausgebildet sein. Der jeweilige Knetblock umfasst mehrere einteilig miteinander verbundene Knetscheiben.

Der Erfindung liegt ferner die Aufgabe zugrunde, ein Verfahren zu schaffen, das in einfacher, flexibler und wirtschaftlicher Weise die wahlweise Herstellung einer gefärbten und einer ungefärbten Kunststoff-Schmelze ermöglicht.

Diese Aufgabe wird durch ein Verfahren mit den Merkmalen des Anspruchs 8 gelöst. Die Vorteile des erfindungsgemäßen Verfahrens entsprechen den bereits beschriebenen Vorteilen der erfindungsgemäßen Vorrichtung. Das Verfahren kann insbesondere auch mit den Merkmalen mindestens eines der Ansprüche 2 bis 7 weitergebildet werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Vorrichtung zur Herstellung einer gefärbten und einer ungefärbten Kunststoff-Schmelze gemäß einem ersten Ausführungsbeispiel,
- Fig. 2: eine teilweise geschnittene Draufsicht auf eine Mehrwellen-Schneckenmaschine der Vorrichtung in Fig. 1,
- Fig. 3: eine Schnittdarstellung der Mehrwellen-Schneckenmaschine entlang einer Schnittlinie III-III in Fig. 2,
- Fig. 4: eine teilweise geschnitten dargestellte Vorrichtung zur Herstellung einer gefärbten und einer ungefärbten Kunststoff-Schmelze gemäß einem zweiten Ausführungsbeispiel, und
- Fig. 5: eine teilweise geschnittene Draufsicht auf eine Mehrwellen-Schneckenmaschine der Vorrichtung in Fig. 4.

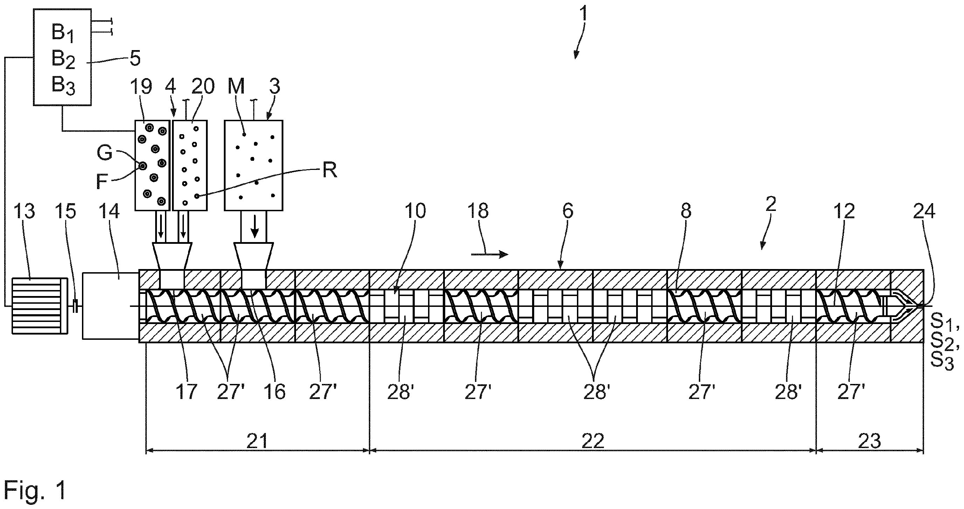

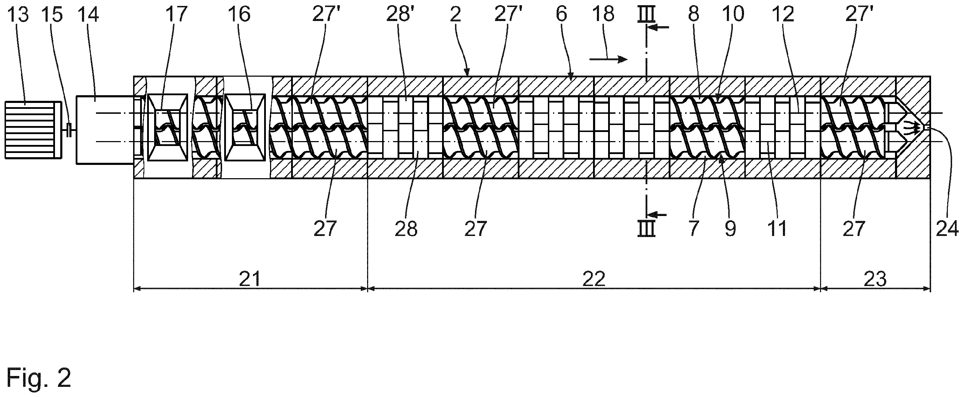

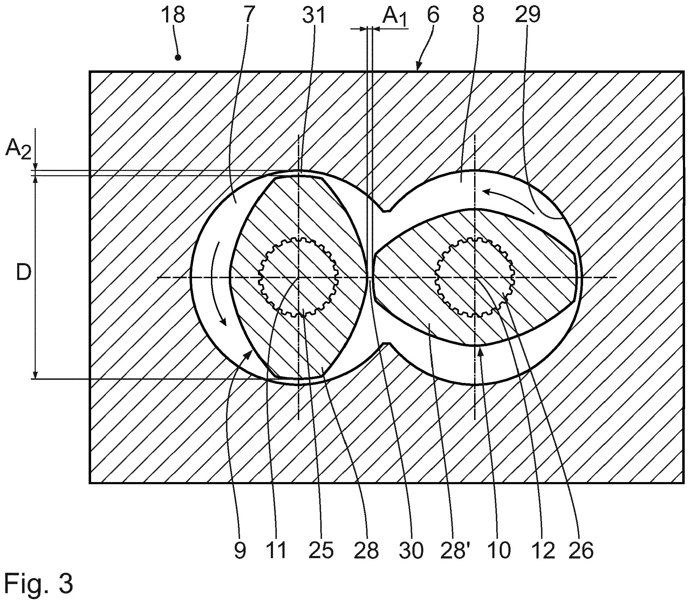

Nachfolgend ist anhand der Fig. 1 bis 3 ein erstes Ausführungsbeispiel der Erfindung beschrieben. Eine Vorrichtung 1 umfasst zur Herstellung einer gefärbten Kunststoff-Schmelze S₁ und einer ungefärbten Kunststoff-Schmelze S₂ eine Mehrwellen-Schneckenmaschine 2, eine erste Dosiereinrichtung 3, eine zweite Dosiereinrichtung 4 und eine Steuereinrichtung 5. Die Mehrwellen-Schneckenmaschine 2 weist ein Gehäuse 6 auf, in dem zwei einander durchdringende Gehäusebohrungen 7, 8 ausgebildet sind. In den Gehäusebohrungen 7, 8 sind Behandlungselementwellen 9, 10 um zugehörige Drehachsen 11, 12 drehbar angeordnet. Die Behandlungselementwellen 9, 10 sind mittels eines Antriebsmotors 13 über ein Verteilergetriebe 14 gleichsinnig, also in gleichen Drehrichtungen drehantreibbar.

Zwischen dem Antriebsmotor 13 und dem Verteilergetriebe 14 ist eine Kupplung 15 angeordnet.

In dem Gehäuse 6 ist eine erste Zuführöffnung 16 und eine zweite Zuführöffnung 17 ausgebildet, die in die Gehäusebohrungen 7, 8 münden. Die zweite Zuführöffnung 17 ist in einer Förderrichtung 18 stromaufwärts zu der ersten Zuführöffnung 16 angeordnet. Die erste Dosiereinrichtung 3 mündet in die erste Zuführöffnung 16 und dient zum Zuführen eines ungefärbten Kunststoffmaterials M durch die erste Zuführöffnung 16 in die Gehäusebohrungen 7, 8. Die erste Dosiereinrichtung 3 ist beispielsweise als gravimetrische Dosiereinheit ausgebildet.

Die zweite Dosiereinrichtung 4 umfasst eine erste Dosiereinheit 19 und eine zweite Dosiereinheit 20. Mittels der ersten Dosiereinheit 19 ist ein Farb-Granulat G und mittels der zweiten Dosiereinheit 20 ein Reinigungs-Granulat R durch die zweite Zuführöffnung 17 in die Gehäusebohrungen 7, 8 zuführbar. Die Dosiereinheiten 19, 20 sind beispielsweise als gravimetrische Dosiereinheiten ausgebildet.

Die Schneckenmaschine 2 weist in der Förderrichtung 18 nacheinander eine Einzugszone 21, eine Aufschmelz- und Mischzone 22 und eine Austragszone 23 auf. Das Gehäuse 6 weist endseitig der Austragszone 23 eine Austragsöffnung 24 auf. Die Zuführöffnungen 16, 17 sind in der Einzugszone 21 angeordnet. Die Behandlungselementwellen 9, 10 umfassen jeweils eine zugehörige Welle 25, 26, auf denen paarweise nebeneinander Schneckenelemente 27, 27' und Knetelemente 28, 28' in der Förderrichtung 18 nacheinander drehfest angeordnet sind. In der Einzugszone 21 sind ausschließlich Schneckenelemente 27, 27' auf den Wellen 25, 26 drehfest angeordnet. In der Aufschmelz- und Mischzone 22 sind Schneckenelemente 27, 27' und Knetelemente 28, 28' drehfest auf den Wellen 25, 26 angeordnet. In der Austragszone 23 sind wiederum ausschließlich Schneckenelemente 27, 27' drehfest auf den Wellen 25, 26 angeordnet. Die Knetelemente 28, 28' sind beispielsweise als einzelne Knetscheiben und/oder als Knetblöcke mit mehreren einteilig miteinander verbundenen Knetscheiben ausgebildet.

Die Behandlungselementwellen 9, 10 sind einander dicht kämmend und eine Gehäuseinnenwand 29 des Gehäuses 6 abstreifend ausgebildet. Hierzu sind die Behandlungselementwellen 9, 10 derart zueinander angeordnet, dass ein von den Behandlungselementwellen 9, 10 begrenzter Spalt 30 - im Querschnitt betrachtet - eine Breite A₁ hat, wobei für die Breite A₁ im Verhältnis zu einem Außendurchmesser D der Behandlungselementwellen 9, 10 gilt: 0,003 ≤ A₁/D ≤ 0,05, insbesondere 0,004 ≤ A₁/D ≤ 0,035, und insbesondere 0,011 ≤ A₁/D ≤ 0,02.

Weiterhin bilden die Behandlungselementwellen 9, 10 mit der Gehäuseinnenwand 29 einen jeweiligen Spalt 31 aus, der - im Querschnitt betrachtet - eine zugehörige Breite A₂ hat, wobei für das Verhältnis der Breite A₂ zu dem Außendurchmesser D gilt: 0,004 ≤ A₂/D ≤ 0,03, insbesondere 0,005 ≤ A₂/D ≤ 0,025, und insbesondere 0,012 ≤ A₂/D ≤ 0,019.

Die Steuereinrichtung 5 dient zum Auswählen zwischen einem ersten Betriebsmodus B₁ zur Herstellung der gefärbten Kunststoff-Schmelze S₁ und einem zweiten Betriebsmodus B₂ zur Herstellung der ungefärbten Kunststoff-Schmelze S₂. Hierzu ist die Steuereinrichtung 5 in Signalverbindung mit der Mehrwellen-Schneckenmaschine 2, der ersten Dosiereinrichtung 3 und der zweiten Dosiereinrichtung 4. Die Steuereinrichtung 5 ist derart ausgebildet, dass in dem ersten Betriebsmodus B₁ mittels der ersten Dosiereinrichtung 3 das ungefärbte Kunststoffmaterial M durch die erste Zuführöffnung 16 und mittels der zweiten Dosiereinrichtung 4 bzw. der ersten Dosiereinheit 19 das Farb-Granulat G durch die zweite Zuführöffnung 17 zuführbar ist. Die Steuereinrichtung 5 ist weiterhin derart ausgebildet, dass in dem zweiten Betriebsmodus B₂ mittels der ersten Dosiereinrichtung 3 das ungefärbte Kunststoffmaterial M durch die erste Zuführöffnung 16 in die mindestens zwei Gehäusebohrungen 7, 8 zuführbar ist. In dem zweiten Betriebsmodus B₂ ist kein Farb-Granulat G mittels der zweiten Dosiereinrichtung 4 in die Gehäusebohrungen 7, 8 zuführbar. Die Steuereinrichtung 5 ist ferner derart ausgebildet, dass bei einer Umstellung von dem ersten Betriebsmodus B₁ auf den zweiten Betriebsmodus B₂ die Vorrichtung 1 zunächst in einem Reinigungsmodus B₃ betrieben wird. In dem Reinigungsmodus B₃ ist mittels der zweiten Dosiereinrichtung 4 bzw. mittels der zweiten Dosiereinheit 20 das Reinigungs-Granulat R durch die zweite Zuführöffnung 17 in die Gehäusebohrungen 7, 8 zuführbar. Die erste Dosiereinheit 19 ist im Reinigungsmodus B₃ deaktiviert. Mittels der ersten Dosiereinrichtung 3 kann im Reinigungsmodus zusätzlich Kunststoffmaterial M durch die erste Zuführöffnung 16 zugeführt werden, um eine Selbstreinigung der Mehrwellen-Schneckenmaschine 2 stromabwärts der ersten Zuführöffnung 16 zu verbessern bzw. zu beschleunigen.

Die Funktionsweise der Vorrichtung 1 ist wie folgt:
Mittels der Steuereinrichtung 5 ist zwischen dem ersten Betriebsmodus B₁ und dem zweiten Betriebsmodus B₂ wählbar. Im ersten Betriebsmodus B₁ erfolgt die Herstellung der gefärbten Kunststoff-Schmelze S₁, wohingegen in dem zweiten Betriebsmodus B₂ die Herstellung der ungefärbten Kunststoff-Schmelze S₂ erfolgt.

In dem ersten Betriebsmodus B₁ wird der Mehrwellen-Schneckenmaschine 2 das ungefärbte Kunststoffmaterial M und das Farb-Granulat G zugeführt. Das Farb-Granulat G gelangt in der Einzugszone 21 durch die zweite Zuführöffnung 17 in die Gehäusebohrungen 7, 8 und wird in der Förderrichtung 18 mittels der Schneckenelemente 27, 27' lediglich zu der ersten Zuführöffnung 16 gefördert. Durch die erste Zuführöffnung 16 wird in der Einzugszone 21 das ungefärbte Kunststoffmaterial M in die Gehäusebohrungen 7, 8 zugeführt. Das ungefärbte Kunststoffmaterial M und das Farb-Granulat G werden zu der Aufschmelz- und Mischzone 22 gefördert. In der Aufschmelz- und Mischzone 22 wird das Farb-Granulat G und gegebenenfalls das Kunststoffmaterial M aufgeschmolzen und das aufgeschmolzene Kunststoffmaterial M mit dem Farbmittel F, das in dem zugeführten Farb-Granulat G enthalten ist, gemischt, sodass die gefärbte Kunststoff-Schmelze S₁ entsteht. Die gefärbte Kunststoff-Schmelze S₁ wird anschließend in der Austragszone 23 durch die Austragsöffnung 24 ausgetragen. Anschließend wird die gefärbte Kunststoff-Schmelze S₁ beispielsweise in üblicher Weise granuliert und ein gefärbtes Kunststoff-Granulat erzeugt.

Das ungefärbte, also naturfarbene Kunststoffmaterial M wird als Schüttgut, insbesondere als Pulver und/oder Granulat, und/oder als Schmelze zugeführt. Das Farbmittel F liegt in gebundener Form in dem Farb-Granulat G vor. Das Farb-Granulat G ist beispielsweise eine Mischung aus dem ungefärbten Kunststoffmaterial M und dem Farbmittel F. Das Farbmittel F ist in dem Farb-Granulat G in konzentrierter Form enthalten. Das Farbmittel F ist beispielsweise Ruß.

Die gefärbte Kunststoff-Schmelze S₁ weist zwischen 0,5 Gew.-% und 10 Gew.-%, insbesondere zwischen 1 Gew.-% und 6 Gew.-%, und insbesondere zwischen 1,5 Gew.-% und 4 Gew.-% Farbmittel F und zwischen 90 Gew.-% und 99,5 Gew.-%, insbesondere zwischen 94 Gew.-% und 99 Gew.-%, und insbesondere zwischen 96 Gew.-% und 98,5 Gew.-% ungefärbtes Kunststoffmaterial M auf. Zusätzlich können der gefärbten Kunststoff-Schmelze S₁ andere Additive als das Farbmittel F zugemischt werden, die in den oben angegebenen Gewichtsanteilen nicht berücksichtigt sind.

Wird anschließend mittels der Steuereinrichtung 5 der zweite Betriebsmodus B₂ ausgewählt, so wird zunächst ein Reinigungsmodus B₃ aktiviert. In dem Reinigungsmodus B₃ wird mittels der zweiten Dosiereinrichtung 4 bzw. der zweiten Dosiereinheit 20 das Reinigungs-Granulat R durch die zweite Zuführöffnung 17 in die Gehäusebohrungen 7, 8 zugeführt. In dem Reinigungsmodus B₃ wird kein Farb-Granulat G zugeführt. Zusätzlich kann im Reinigungsmodus B₃ mittels der ersten Dosiereinrichtung 3 ungefärbtes Kunststoffmaterial M durch die erste Zuführöffnung 16 in die Gehäusebohrungen 7, 8 zugeführt werden. In einem Übergangszeitraum findet nach der Beendigung des ersten Betriebsmodus B₁, also während des Reinigungsmodus B₃, eine Selbstreinigung der Mehrwellen-Schneckenmaschine 2 statt. Restliches Farb-Granulat G und/oder restliches Farbmittel F, das sich im Bereich der zweiten Zuführöffnung 17 und in den Gehäusebohrungen 7, 8, insbesondere an den Behandlungselementwellen 9, 10 und an der Gehäuseinnenwand 29 befindet, wird aufgrund der dicht kämmenden Ausbildung der Behandlungselementwellen 9, 10 und dem Abstreifen der Gehäuseinnenwand 29 mittels der Behandlungselementwellen 9, 10 aus der Mehrwellen-Schneckenmaschine 2 entfernt. In diesem Übergangszeitraum entsteht eine unreine Kunststoff-Schmelze S₃, die weder als gefärbte Kunststoff-Schmelze S₁ noch als ungefärbte Kunststoff-Schmelze S₂ verwertbar ist und deshalb separiert werden muss. Nach dem Übergangszeitraum ist die Selbstreinigung abgeschlossen, sodass der Reinigungsmodus B₃ beendet wird. Hierzu wird die zweite Dosiereinrichtung 4 bzw. die zweite Dosiereinheit 20 deaktiviert, sodass kein Reinigungs-Granulat R mehr durch die zweite Zuführöffnung 17 in die Gehäusebohrungen 7, 8 gelangt. Anschließend wird in dem zweiten Betriebsmodus B₂ die ungefärbte Kunststoff-Schmelze S₂ erzeugt. Hierzu wird durch die erste Zuführöffnung 16 mittels der ersten Dosiereinrichtung 3 das ungefärbte Kunststoffmaterial M in die Gehäusebohrungen 7, 8 zugeführt und zu der Aufschmelz- und Mischzone 22 gefördert und dort gegebenenfalls aufgeschmolzen und anschließend in der Austragszone 23 ausgetragen. Das Kunststoffmaterial M wird in dem zweiten Betriebsmodus B₂ als Schüttgut, insbesondere als Pulver und/oder als Granulat, und/oder als Schmelze zugeführt.

Eine Umstellung von dem zweiten Betriebsmodus B₂ zu dem ersten Betriebsmodus B₁ ist in einfacher Weise möglich, da zur Herstellung der gefärbten Kunststoff-Schmelze S₁ keine Selbstreinigung der Mehrwellen-Schneckenmaschine 2 erforderlich ist.

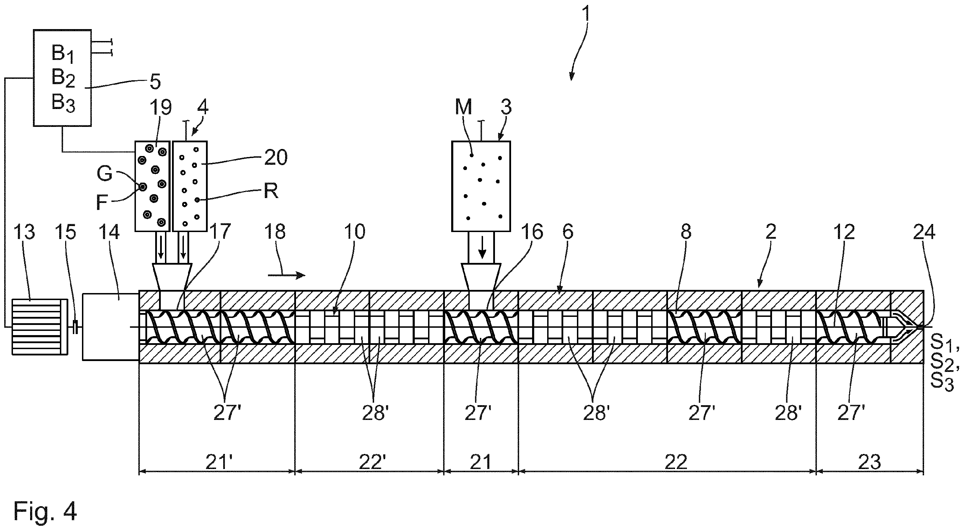

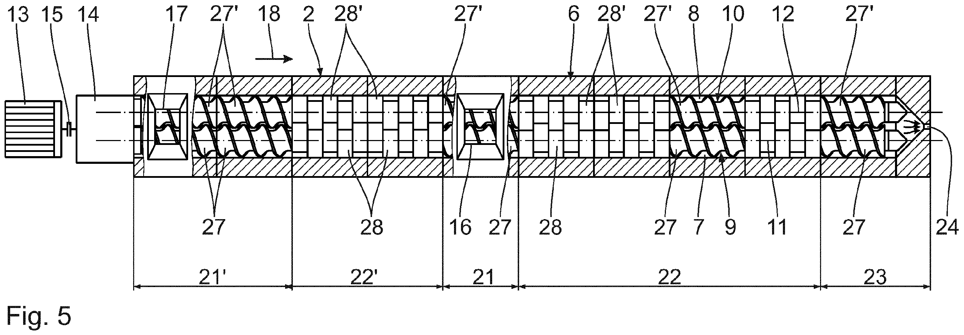

Nachfolgend ist anhand der Fig. 4 und 5 ein zweites Ausführungsbeispiel der Erfindung beschrieben. Im Unterschied zu dem vorangegangenen Ausführungsbeispiel bildet die Mehrwellen-Schneckenmaschine 2 in der Förderrichtung 18 nacheinander eine erste Einzugszone 21', eine Aufschmelzzone 22', eine zweite Einzugszone 21, die Aufschmelz- und Mischzone 22 und die Austragszone 23 aus. Im Bereich der ersten Einzugszone 22' sind ausschließlich Schneckenelemente 27, 27' drehfest auf den Wellen 25, 26 angeordnet. Demgegenüber sind in der Aufschmelzzone 22' ausschließlich Knetelemente 28, 28' drehfest auf den Wellen 25, 26 angeordnet. Die Knetelemente 28, 28' sind als einzelne Knetscheiben und/oder als Knetblöcke mit mehreren einteilig miteinander verbundenen Knetscheiben ausgebildet. Die zweite Zuführöffnung 17 ist der ersten Einzugszone 21', also stromaufwärts der ersten Zuführöffnung 16 angeordnet. Die erste Zuführöffnung 16 ist in der zweiten Einzugszone 21 angeordnet. Zwischen den Zuführöffnungen 16, 17 ist somit die Aufschmelzzone 22' angeordnet. Dementsprechend sind zwischen den Zuführöffnungen 16, 17 Schneckenelemente 27, 27' und Knetelemente 28, 28' drehfest auf den Wellen 25, 26 angeordnet.

Im ersten Betriebsmodus B₁ wird mittels der zweiten Dosiereinrichtung 4 bzw. der ersten Dosiereinheit 19 das Farb-Granulat G durch die zweite Zuführöffnung 17 in die erste Einzugszone 21' zugeführt. Das Farb-Granulat G wird zu der Aufschmelzzone 22' gefördert und dort mittels der Knetelemente 28, 28' aufgeschmolzen. Dem aufgeschmolzenen Farb-Granulat G wird in der zweiten Einzugszone 21 mittels der ersten Dosiereinrichtung 3 das ungefärbte Kunststoffmaterial M durch die erste Zuführöffnung 16 zugeführt. In der Aufschmelz- und Mischzone 22 wird das aufgeschmolzene Farb-Granulat G bzw. das darin enthaltene Farbmittel F mit dem als Schmelze vorliegenden Kunststoffmaterial M gemischt. Anschließend wird die gefärbte Kunststoff-Schmelze S₁ in der Austragszone 23 ausgetragen.

In dem Reinigungsmodus B₃ wird entsprechend das Reinigungs-Granulat R durch die zweite Zuführöffnung 17 in die erste Einzugszone 21' zugeführt und zu der Aufschmelzzone 22' gefördert. Das Reinigungs-Granulat R wird in der Aufschmelzzone 22' aufgeschmolzen und anschließend zu der zweiten Einzugszone 21, der Aufschmelz- und Mischzone 22 und der Austragszone 23 gefördert. Hierdurch erfolgt die Selbstreinigung der Mehrwellen-Schneckenmaschine 2, insbesondere der zweiten Zuführöffnung 17, der Behandlungselementwellen 9, 10 und der Gehäuseinnenwand 29. Zusätzlich kann durch die erste Zuführöffnung 16 in dem Reinigungsmodus B₃ Kunststoffmaterial M zugeführt werden. Hinsichtlich des weiteren Aufbaus und der weiteren Funktionsweise wird auf das vorangegangene Ausführungsbeispiel verwiesen.

Die erfindungsgemäße Vorrichtung 1 ermöglicht die wahlweise Herstellung einer gefärbten Kunststoff-Schmelze S₁ und einer ungefärbten Kunststoff-Schmelze S₂ mit lediglich einer einzigen Mehrwellen-Schneckenmaschine 2. Der maschinentechnische Aufwand ist hierdurch vergleichsweise gering. Wird von dem ersten Betriebsmodus B₁ auf den zweiten Betriebsmodus B₂ umgestellt, so entsteht während der Selbstreinigung in einem Übergangzeitraum, also in dem Reinigungsmodus B₃, eine unreine Kunststoff-Schmelze S₃. Das daraus hergestellte unreine Kunststoff-Granulat wird je nach Wirtschaftlichkeit verkauft oder bei einer nachfolgenden Herstellung der gefärbten Kunststoff-Schmelze S₁ über die zweite Zuführöffnung 17 wieder der Mehrwellen-Schneckenmaschine 2 zugeführt und weiterverarbeitet. Die Vorrichtung 1 ermöglicht somit eine einfache, flexible und wirtschaftliche Herstellung von wahlweise einer gefärbten Kunststoff-Schmelze S₁ und einer ungefärbten Kunststoff-Schmelze S₂.

## Patentansprüche

1. Vorrichtung zur Herstellung einer gefärbten und einer ungefärbten Kunststoff-Schmelze umfassend
- eine Mehrwellen-Schneckenmaschine (2) zur Bereitstellung einer Kunststoff-Schmelze (S₁, S₂) mit
-- einem Gehäuse (6),
-- mindestens zwei in dem Gehäuse (6) ausgebildeten und einander durchdringenden Gehäusebohrungen (7, 8),
-- einer ersten Zuführöffnung (16) und einer zweiten Zuführöffnung (17), die in die mindestens zwei Gehäusebohrungen (7, 8) münden,
-- mindestens zwei in den Gehäusebohrungen (7, 8) drehantreibbar angeordneten Behandlungselementwellen (9, 10),
- eine erste Dosiereinrichtung (3) zum Zuführen eines ungefärbten Kunststoffmaterials (M) durch die erste Zuführöffnung (16) in die mindestens zwei Gehäusebohrungen (7, 8), und
- eine zweite Dosiereinrichtung (4) zum Zuführen eines Farb-Granulats (G) durch die zweite Zuführöffnung (17) in die mindestens zwei Gehäusebohrungen (7, 8),
**dadurch gekennzeichnet,**
**dass** die zweite Dosiereinrichtung (4) eine erste Dosiereinheit (19) zum Zuführen des Farb-Granulats (G) und eine zweite Dosiereinheit (20) zum Zuführen eines Reinigungs-Granulats (R) umfasst, die in die zweite Zuführöffnung (17) münden,
**dass** die zweite Zuführöffnung (17) in Förderrichtung (18) stromaufwärts zu der ersten Zuführöffnung (16) angeordnet ist,
**dass** die Vorrichtung (1) eine Steuereinrichtung (5) zum Auswählen zwischen einem ersten Betriebsmodus (B₁) zur Herstellung der gefärbten Kunststoff-Schmelze (S₁) und einem zweiten Betriebsmodus (B₂) zur Herstellung der ungefärbten Kunststoff-Schmelze (S₂) umfasst, dass die Steuereinrichtung (5) derart ausgebildet ist, dass in einem Reinigungsmodus (B₃) mittels der zweiten Dosiereinrichtung (4) das Reinigungs-Granulat (R) durch die zweite Zuführöffnung (17) in die mindestens zwei Gehäusebohrungen (7, 8) zuführbar ist.

2. Vorrichtung nach Anspruch 1, **dadurch gekennzeichnet,**
**dass** die Steuereinrichtung (5) derart ausgebildet ist, dass
- in dem ersten Betriebsmodus (B₁) mittels der ersten Dosiereinrichtung (3) das ungefärbte Kunststoffmaterial (M) durch die erste Zuführöffnung (16) und mittels der zweiten Dosiereinrichtung (4) das Farb-Granulat (G) durch die zweite Zuführöffnung (17) in die mindestens zwei Gehäusebohrungen (7, 8) zuführbar ist, und
- in dem zweiten Betriebsmodus (B₂) mittels der ersten Dosiereinrichtung (3) das ungefärbte Kunststoffmaterial (M) durch die erste Zuführöffnung (16) in die mindestens zwei Gehäusebohrungen (7, 8) zuführbar ist.

3. Vorrichtung nach einem der Ansprüche 1 oder 2, **dadurch gekennzeichnet,**
**dass** die Behandlungselementwellen (9, 10) zwischen sich einen Spalt (30) ausbilden und für eine Breite A₁ des Spalts (30) im Verhältnis zu einem Außendurchmesser D der Behandlungselementwellen (9, 10) gilt: 0,003 ≤ A₁/D ≤ 0,05, insbesondere 0,004 ≤ A₁/D ≤ 0,035, und insbesondere 0,011 ≤ A₁/D ≤ 0,02.

4. Vorrichtung nach einem der Ansprüche 1 bis 3, **dadurch gekennzeichnet,**
**dass** die Behandlungselementwellen (9, 10) mit einer Gehäuseinnenwand (29) des Gehäuses (6) einen Spalt (31) ausbilden und für eine Breite A₂ des Spalts (31) im Verhältnis zu einem Außendurchmesser D der Behandlungselementwellen (9, 10) gilt: 0,004 ≤ A₂/D ≤ 0,03, insbesondere 0,005 ≤ A₂/D ≤ 0,025, und insbesondere 0,012 ≤ A₂/D ≤ 0,019.

5. Vorrichtung nach einem der Ansprüche 1 bis 4, **dadurch gekennzeichnet,**
**dass** die mindestens zwei Behandlungselementwellen (9, 10) jeweils eine Welle (25, 26) umfassen und zwischen den Zuführöffnungen (16, 17) Knetelemente (28, 28') drehfest auf den Wellen (25, 26) angeordnet sind.

6. Vorrichtung nach einem der Ansprüche 1 bis 5, **dadurch gekennzeichnet,**
**dass** die mindestens zwei Behandlungselementwellen (9, 10) jeweils eine Welle (25, 26) umfassen und zwischen den Zuführöffnungen (16, 17) Schneckenelemente (27, 27') drehfest auf den Wellen (25, 26) angeordnet sind.

7. Vorrichtung nach einem der Ansprüche 1 bis 6, **dadurch gekennzeichnet,**
**dass** die mindestens zwei Behandlungselementwellen (9, 10) jeweils eine Welle (25, 26) umfassen und stromabwärts der Zuführöffnungen (16, 17) Schneckenelemente (27, 27') und Knetelemente (28, 28') drehfest auf den Wellen (25, 26) angeordnet sind.

8. Verfahren zur Herstellung einer gefärbten und einer ungefärbten Kunststoff-Schmelze mit den Schritten:
- Bereitstellen einer Mehrwellen-Schneckenmaschine (2) mit
-- einem Gehäuse (6),
-- mindestens zwei in dem Gehäuse (6) ausgebildeten und einander durchdringenden Gehäusebohrungen (7, 8),
-- einer ersten Zuführöffnung (16) und einer zweiten Zuführöffnung (17), die in die mindestens zwei Gehäusebohrungen (7, 8) münden, wobei die zweite Zuführöffnung (17) in Förderrichtung (18) stromaufwärts zu der ersten Zuführöffnung (16) angeordnet ist,
-- mindestens zwei in den Gehäusebohrungen (7, 8) drehantreibbar angeordneten Behandlungselementwellen (9, 10),
- Bereitstellen einer ersten Dosiereinrichtung (3) und einer zweiten Dosiereinrichtung (4), wobei die zweite Dosiereinrichtung (4) eine erste Dosiereinheit (19) zum Zuführen eines Farb-Granulats (G) und eine zweite Dosiereinheit (20) zum Zuführen eines Reinigungs-Granulats (R) umfasst, die in die zweite Zuführöffnung (17) münden,
- Auswählen zwischen einem ersten Betriebsmodus (B₁) zur Herstellung der gefärbten Kunststoff-Schmelze (S₁) und einem zweiten Betriebsmodus (B₂) zur Herstellung der ungefärbten Kunststoff-Schmelze (S₂) mittels einer Steuereinrichtung (5), wobei
-- in dem ersten Betriebsmodus (B₁) mittels der ersten Dosiereinrichtung (3) ein ungefärbtes Kunststoffmaterial (M) durch die erste Zuführöffnung (16) und mittels der zweiten Dosiereinrichtung (4) das Farb-Granulat (G) durch die zweite Zuführöffnung (17) in die mindestens zwei Gehäusebohrungen (7, 8) zugeführt wird, und
-- in dem zweiten Betriebsmodus (B₂) mittels der ersten Dosiereinrichtung (3) das ungefärbte Kunststoffmaterial (M) durch die erste Zuführöffnung (16) in die mindestens zwei Gehäusebohrungen (7, 8) zugeführt wird, wobei nach der Herstellung der gefärbten Kunststoff-Schmelze (S₁) in dem ersten Betriebsmodus (B₁) die Mehrwellen-Schneckenmaschine (2) in einem Reinigungsmodus (B₃) gereinigt wird, wobei in dem Reinigungsmodus (B₃) mittels der zweiten Dosiereinrichtung (4) das Reinigungs-Granulat (R) durch die zweite Zuführöffnung (17) in die mindestens zwei Gehäusebohrungen (7, 8) zugeführt wird, und
- Betreiben der Mehrwellen-Schneckenmaschine (2) und der Dosiereinrichtungen (3, 4) in dem ausgewählten Betriebsmodus (B₁, B₂).

## Claims

1. Device for producing a dyed and an undyed plastic melt, comprising
- a multi-shaft screw extruder (2) for providing a plastic melt (S₁, S₂), having
-- a housing (6),
-- at least two mutually penetrating housing bores (7, 8) that are configured in the housing (6),
-- a first infeed opening (16) and a second infeed opening (17) which open into the at least two housing bores (7, 8),
-- at least two treatment element shafts (9, 10) that are disposed so as to be rotatingly drivable in the housing bores (7, 8),
- a first metering installation (3) for feeding an undyed plastic material (M) through the first infeed opening (16) into the at least two housing bores (7, 8), and
- a second metering installation (4) for feeding at least one color granulate (G) through the second infeed opening (17) into the at least two housing bores (7, 8),
**characterized in**
**that** the second metering installation (4) comprises a first metering unit (19) for feeding the color granulate (G), and a second metering unit (20) for feeding a cleaning granulate (R), said metering units (19, 20) opening into the second infeed opening (17),
**that** the second infeed opening (17) in a conveying direction (18) is disposed upstream of the first infeed opening (16),
**that** the device comprises a control installation (5) for selecting between a first operating mode (B₁) for producing the dyed plastic melt (S₁) and a second operating mode (B₂) for producing the undyed plastic melt (S₂),
**that** the control installation (5) is configured in such a manner that in a cleaning mode (B₃) the cleaning granulate (R) by means of the second metering installation (4) is capable of being fed through the second infeed opening (17) into the at least two housing bores (7, 8).

2. Device as claimed in claim 1, **characterized in that** the control installation (5) is configured in such a manner that
- in the first operating mode (B₁) the undyed plastic material (M) by means of the first metering installation (3) through the first infeed opening (16), and the color granulate (G) by means of the second metering installation (4) through the second infeed opening (17), are capable of being fed into the at least two housing bores (7, 8), and
- in the second operating mode (B₂) the undyed plastic material (M) by means of the first metering installation (3) is capable of being fed through the first infeed opening (16) into the at least two housing bores (7, 8).

3. Device as claimed in one of claims 1 or 2, **characterized in that** the treatment element shafts (9, 10) therebetween configure a gap (30), and where a width A₁ of the gap (30) in relation to an external diameter D of the treatment element shafts (9, 10) is: 0.003 ≤ A₁/D ≤ 0.05, in particular 0.004 ≤ A₁/D ≤ 0.035, and in particular 0.011 ≤ A₁/D ≤ 0.02.

4. Device as claimed in one of claims 1 to 3, **characterized in that** the treatment element shafts (9, 10) conjointly with a housing internal wall (29) of the housing (6) configure a gap (31), and where a width A₂ of the gap (31) in relation to an external diameter D of the treatment element shafts (9, 10) is: 0.004 ≤ A₂/D ≤ 0.03, in particular 0.005 ≤ A₂/D ≤ 0.025, and in particular 0.012 ≤ A₂/D ≤ 0.019.

5. Device as claimed in one of claims 1 to 4, **characterized in that** the at least two treatment element shafts (9, 10) comprise in each case one shaft (25, 26), and kneading elements (28, 28') are disposed so as to be rotationally fixed on the shafts (25, 26) between the infeed openings (16, 17).

6. Device as claimed in one of claims 1 to 5, **characterized in that** the at least two treatment element shafts (9, 10) comprise in each case one shaft (25, 26), and screw elements (27, 27') are disposed so as to be rotationally fixed on the shafts (25, 26) between the infeed openings (16, 17).

7. Device as claimed in one of claims 1 to 6, **characterized in that** the at least two treatment element shafts (9, 10) comprise in each case one shaft (25, 26), and screw elements (27, 27') and kneading elements (28, 28') are disposed so as to be rotationally fixed on the shafts (25, 26) downstream of the infeed openings (16, 17).

8. Method for producing a dyed and an undyed plastic melt, comprising the following method steps:
- providing a multi-shaft screw extruder (2) having
-- a housing (6),
-- at least two mutually penetrating housing bores (7, 8) that are configured in the housing (6),
-- a first infeed opening (16) and a second infeed opening (17) which open into the at least two housing bores (7, 8), wherein the second infeed opening (17) in a conveying direction (18) is disposed upstream of the first infeed opening (16),
-- at least two treatment element shafts (9, 10) that are disposed so as to be rotatingly drivable in the housing bores (7, 8),
- providing a first metering installation (3) and a second metering installation (4), wherein the second metering installation (4) comprises a first metering unit (19) for feeding a color granulate (G), and a second metering unit (20) for feeding a cleaning granulate (R), said metering units (19, 20) opening into the second infeed opening (17),
- selecting between a first operating mode (B 1) for producing the dyed plastic melt (S₁) and a second operating mode (B₂) for producing the undyed plastic melt (S₂) by means of a control installation (5), wherein
-- in the first operating mode (B₁) an undyed plastic material (M) by means of the first metering installation (3) through the first infeed opening (16), and the color granulate (G) by means of the second metering installation (4) through the second infeed opening (17), are fed into the at least two housing bores (7, 8), and
-- in the second operating mode (B₂) the undyed plastic material (M) by means of the first metering installation (3) is fed through the first infeed opening (16) into the at least two housing bores (7, 8), wherein after the production of the dyed plastic melt (S₁) in the first operating mode (B₁) the multi-shaft screw extruder is cleaned in a cleaning mode (B₃), wherein in the cleaning mode (B₃) the cleaning granulate (R) by means of the second metering installation (4) is capable of being fed through the second infeed opening (17) into the at least two housing bores (7, 8), and
- operating the multi-shaft screw extruder (2) and the metering installations (3, 4) in the selected operating mode (B₁, B₂).

## Revendications

1. Dispositif de fabrication d'une matière plastique fondue colorée et non colorée comprenant
- une machine à vis sans fin à plusieurs arbres (2) **permettant** la fourniture d'une matière plastique fondue (S₁, S₂) comportant
- un carter (6),
- au moins deux alésages (7, 8) du carter réalisés dans le carter (6) et pénétrant l'un dans l'autre,
- un premier orifice d'alimentation (16) et un deuxième orifice d'alimentation (17) qui débouchent dans les au moins deux alésages (7, 8) du carter,
- au moins deux arbres d'éléments de traitement (9, 10) disposés pour être entraînés en rotation dans les alésages (7, 8) du carter,
- un premier dispositif de dosage (3) servant à alimenter en une matière plastique (M) non colorée, à travers le premier orifice d'alimentation (16), les au moins deux alésages (7, 8) du carter, et
- un deuxième dispositif de dosage (4) servant à alimenter en un granulé de couleur (G), à travers le deuxième orifice d'alimentation (17), les au moins deux alésages (7, 8) du carter,
**caractérisé**
**en ce que** le deuxième dispositif de dosage (4) comprend une première unité de dosage (19) destinée à l'alimentation du granulé de couleur (G) et une deuxième unité de dosage (20) destinée à l'alimentation d'un granulé de nettoyage (R), lesquelles débouchent dans le deuxième orifice d'alimentation (17),
**en ce que** le deuxième orifice d'alimentation (17) est disposé en amont du premier orifice d'alimentation (16) dans la direction de transport (18), **en ce que** le dispositif (1) comprend un dispositif de commande (5) destiné à sélectionner entre un premier mode de fonctionnement (B₁), permettant la fabrication de la matière plastique fondue colorée (S₁), et un deuxième mode de fonctionnement (B₂), permettant la fabrication de la matière plastique fondue non colorée (S₂),
**en ce que** le dispositif de commande (5) est conçu de telle manière que, dans un mode de nettoyage (B₃) au moyen du deuxième dispositif de dosage (4), le granulé de nettoyage (R) peut être alimenté à travers le deuxième orifice d'alimentation (17) dans les au moins deux alésages (7, 8) du carter.

2. Dispositif selon la revendication 1, **caractérisé**
**en ce que** le dispositif de commande (5) est conçu de telle manière que
- dans le premier mode de fonctionnement (B₁), la matière plastique non colorée (M) peut être alimentée au moyen du premier dispositif de dosage (3) à travers le premier orifice d'alimentation (16) et, au moyen du deuxième dispositif de dosage (4), le granulé coloré (G) peut être alimenté à travers le deuxième orifice d'alimentation (17) dans les au moins deux alésages (7, 8) du carter, et
- dans le deuxième mode de fonctionnement (B₂), la matière plastique non colorée (M) peut être alimentée au moyen du premier dispositif de dosage (3), à travers le premier orifice d'alimentation (16), dans les au moins deux alésages (7, 8) du carter.

3. Dispositif selon l'une des revendications 1 ou 2, **caractérisé**
**en ce que** les arbres d'éléments de traitement (9, 10) forment entre eux une fente (30) et ce qui suit s'applique à une largeur A₁ de la fente (30) par rapport à un diamètre extérieur D des arbres d'éléments de traitement (9, 10) : 0,003 ≤ A₁/D ≤ 0,05, en particulier 0,004 ≤ A₁/D ≤ 0,035, et en particulier 0,011 ≤ A₁/D ≤ 0,02.

4. Dispositif selon l'une des revendications 1 à 3, **caractérisé**
**en ce que** les arbres d'éléments de traitement (9, 10) forment une fente (31) avec une paroi intérieure (29) du carter (6) et ce qui suit s'applique à une largeur A₂ de la fente (31) par rapport à un diamètre extérieur D des arbres d'éléments de traitement (9, 10) : 0,004 ≤ A₂/D ≤ 0,03, en particulier 0,005 ≤ A₂/D ≤ 0,025, et en particulier 0,012 ≤ A₂/D ≤ 0,019.

5. Dispositif selon l'une des revendications 1 à 4, **caractérisé**
**en ce que** les au moins deux arbres d'éléments de traitement (9, 10) comprennent chacun un arbre (25, 26) et **en ce que** des éléments de malaxage (28, 28') sont disposés sur les arbres (25, 26) de manière solidaire en rotation entre les orifices d'alimentation (16, 17).

6. Dispositif selon l'une des revendications 1 à 5, **caractérisé**
**en ce que** les au moins deux arbres d'éléments de traitement (9, 10) comprennent chacun un arbre (25, 26) et **en ce que** des éléments de vis sans fin (27, 27') sont disposés sur les arbres (25, 26) de manière solidaire en rotation entre les orifices d'alimentation (16, 17).

7. Dispositif selon l'une des revendications 1 à 6, **caractérisé**
**en ce que** les au moins deux arbres d'éléments de traitement (9, 10) comprennent chacun un arbre (25, 26) et **en ce que** des éléments de vis sans fin (27, 27') et des éléments de malaxage (28, 28') sont disposés sur les arbres (25, 26) de manière solidaire en rotation en aval des orifices d'alimentation (16, 17).

8. Procédé de fabrication d'une matière plastique fondue colorée et non colorée comprenant les étapes :
- de fourniture d'une machine à vis sans fin à plusieurs arbres (2) comportant
- un carter (6),
- au moins deux alésages (7, 8) du carter réalisés dans le carter (6) et pénétrant l'un dans l'autre,
- un premier orifice d'alimentation (16) et un deuxième orifice d'alimentation (17) qui débouchent dans les au moins deux alésages (7, 8) du carter, dans lequel le deuxième orifice d'alimentation (17) est disposé en amont du premier orifice d'alimentation (16) dans la direction de transport (18),
- au moins deux arbres d'éléments de traitement (9, 10) disposés pour être entraînés en rotation dans les alésages (7, 8) du carter,
- de fourniture d'un premier dispositif de dosage (3) et d'un deuxième dispositif de dosage (4), dans lequel le deuxième dispositif de dosage (4) comprend une première unité de dosage (19) permettant l'alimentation d'un granulé de couleur (G) et une deuxième unité de dosage (20) permettant l'alimentation d'un granulé de nettoyage (R), lesquelles débouchent dans le deuxième orifice d'alimentation (17),
- de sélection entre un premier mode de fonctionnement (B₁), permettant la fabrication de la matière plastique fondue colorée (S₁) et un deuxième mode de fonctionnement (B₂), permettant la fabrication de la matière plastique fondue non colorée (S₂) au moyen d'un dispositif de commande (5), dans lequel
- dans le premier mode de fonctionnement (B₁), une matière plastique non colorée (M) est alimentée au moyen du premier dispositif de dosage (3) à travers le premier orifice d'alimentation (16) et, au moyen du deuxième dispositif de dosage (4), le granulé coloré (G) est alimenté à travers le deuxième orifice d'alimentation (17) dans les au moins deux alésages (7, 8) du carter, et
- dans le deuxième mode de fonctionnement (B₂), la matière plastique non colorée (M) est alimentée au moyen du premier dispositif de dosage (3), à travers le premier orifice d'alimentation (16), dans les au moins deux alésages (7, 8) du carter, dans lequel, après la fabrication de la matière plastique fondue colorée (S₁) dans le premier mode de fonctionnement (B₁), la machine à vis sans fin à plusieurs arbres (2) est nettoyée dans un mode de nettoyage (B₃), dans lequel, dans le mode de nettoyage (B₃), le granulé de nettoyage (R) est alimenté au moyen du deuxième dispositif de dosage (4), à travers le deuxième orifice d'alimentation (17), dans les au moins deux alésages (7, 8) du carter, et
- d'exploitation de la machine à vis à plusieurs arbres (2) et des dispositifs de dosage (3, 4) dans le mode de fonctionnement (B₁, B₂) sélectionné.
